# EUROPEAN PATENT APPLICATION

(11) **EP 3 226 068 A1**
(43) Date of publication of application: **04.10.2017**
(21) Application number: 17162021.4
(22) Date of filing: 21.03.2017
(51) Int. Cl.: G02C 13/00, A61B 3/113

(54) **SPECTACLE WEARING IMAGE ANALYSIS APPARATUS, SPECTACLE WEARING IMAGE ANALYSIS METHOD, AND SPECTACLE WEARING IMAGE ANALYSIS PROGRAM**

(30) Priority: 29.03.2016 JP 2016066021
(71) Applicant: Nidek Co., Ltd., Gamagori-shi, Aichi, 443-0038 (JP)
(72) Inventor: OZAKI, Yoshihiro, Gamagori-shi, Aichi 443-0038 (JP); TOCHIKUBO, Yujiro, Gamagori-shi,, Aichi 443-0038 (JP)
(74) Representative: Zimmermann, Tankred Klaus

(57) **Abstract**

A spectacle wearing image analysis apparatus (1) includes: acquisition means (70) for acquiring first wear data obtained by photographing an examinee wearing a spectacle frame at a first timing, and second wear data obtained by photographing the examinee wearing the spectacle frame at a second timing different from the first timing; and control means (70) for outputting comparison information for comparing the first wear data and the second wear data. Consequently, the processor can easily and suitably adjust the fit for the examinee.

## Description

### BACKGROUND

### 1. Technical Field

The present disclosure relates to a spectacle wearing image analysis apparatus, a spectacle wearing image analysis method, and a spectacle wearing image analysis program that analyze a captured image for measuring a spectacle wearing parameter to produce spectacles.

### 2. Description of the Related Art

The following spectacle wearing image analysis apparatus was proposed (see JP-A-2007-216049). When spectacles are produced with this apparatus, the face of an examinee wearing a spectacle frame is photographed by an imaging apparatus. Spectacle wearing parameters to produce spectacles are calculated from the image. A processor produces spectacles on the basis of the calculated spectacle wearing parameters. After producing the spectacles, the processor prompts the examinee to put on the spectacles after the production of the spectacles, adjusts the fit (adjusts the spectacle wearing state), and completes producing the spectacles.

### SUMMARY

A processor conventionally completes spectacles by prompting an examinee to put on the produced spectacles and adjusting the fit thereof. However, the fit is adjusted on the basis of, for example, the processor's experience. Hence, there are variations in adjustment according to the processor.

Moreover, it has conventionally been difficult for the processor to check the fit. Hence, even if, for example, the processor adjusts the fit, a fit at the time of calculating spectacle wearing parameters to produce spectacles may be different from a fit after the production of the spectacles. In this case, even if the spectacles are produced on the basis of the calculated spectacle wearing parameters, the function of the spectacles cannot be effectively exploited and, accordingly, the produced spectacles cannot be suitably used in some cases.

Moreover, it has been difficult for the processor to check the fit of spectacles. Hence, even if the fit changes from one at the completion of the production of the spectacles while the examinee uses the produced spectacles for a fixed period of time, it has been difficult for the processor to reproduce the fit at the completion of the production of the spectacles.

Considering the above problems, the present disclosure relates to the provision of a spectacle wearing image analysis apparatus, a spectacle wearing image analysis method, and a spectacle wearing image analysis program that allow a processor to make easy and suitable adjustments to the fit.

In order to solve the above issue, the present disclosure includes the following configurations.

A spectacle wearing image analysis apparatus according to a first aspect of the present disclosure includes: acquisition means for acquiring first wear data obtained by photographing an examinee wearing a spectacle frame at a first timing, and second wear data obtained by photographing the examinee wearing the spectacle frame at a second timing different from the first timing; and control means for outputting comparison information for comparing the first wear data and the second wear data.

The spectacle wearing image analysis apparatus according to a second aspect of the present disclosure is the spectacle wearing image analysis apparatus according to the first aspect, in which the control means displays, on a monitor, the first wear data and the second wear data as the comparison information.

The spectacle wearing image analysis apparatus according to a third aspect of the present disclosure is the spectacle wearing image analysis apparatus according to the first or second aspect, in which the acquisition means includes at least a first image obtained by photographing at the first timing, in the first wear data, and includes at least a second image obtained by photographing at the second timing, in the second wear data, and the control means outputs the first and second images as the comparison information.

The spectacle wearing image analysis apparatus according to a fourth aspect of the present disclosure is the spectacle wearing image analysis apparatus according to the first or second aspect, in which the acquisition means includes at least a first spectacle wearing parameter acquired by analyzing a first image obtained by photographing at the first timing, in the first wear data, and includes at least a second spectacle wearing parameter acquired by analyzing a second image obtained by photographing at the second timing, in the second wear data, and the control means outputs the first and second spectacle wearing parameters as the comparison information.

The spectacle wearing image analysis apparatus according to a fifth aspect of the present disclosure is the spectacle wearing image analysis apparatus according to the first or second aspect, in which the acquisition means includes at least a first image obtained by photographing at the first timing, and a first spectacle wearing parameter acquired by analyzing the first image, in the first wear data, and includes at least a second image obtained by photographing at the second timing, and a second spectacle wearing parameter acquired by analyzing the second image, in the second wear data, and the control means outputs, as the comparison information, the first image, the first spectacle wearing parameter, the second image, and the second spectacle wearing parameter.

The spectacle wearing image analysis apparatus according to a sixth aspect of the present disclosure is the spectacle wearing image analysis apparatus according to any one of the first to fifth aspects, in which the control means acquires difference data by performing subtraction processing on the first wear data and the second wear data, and outputs the difference data as the comparison information.

The spectacle wearing image analysis apparatus according to a seventh aspect of the present disclosure is the spectacle wearing image analysis apparatus according to any one of the first to sixth aspects, further includes a photographing apparatus for photographing the examinee wearing the spectacle frame.

A spectacle wearing image analysis method according to an eighth aspect of the present disclosure includes: an acquisition step of acquiring first wear data obtained by photographing an examinee wearing a spectacle frame at a first timing, and second wear data obtained by photographing the examinee wearing the spectacle frame at a timing different from the first timing; and a control step of outputting comparison information for comparing the first wear data and the second wear data.

A spectacle wearing image analysis program according to the ninth aspect of the present disclosure causes a spectacle wearing image analysis apparatus to execute the spectacle wearing image analysis method according to the eighth aspect.

### BRIEF DESCRIPTION OF DRAWINGS

Fig. 1 is a schematic configuration diagram of the external appearance of a spectacle wearing image analysis apparatus according to the embodiment;
Fig. 2 is a schematic configuration diagram of optical systems accommodated in the spectacle wearing image analysis apparatus according to the embodiment;
Fig. 3 illustrates a schematic configuration diagram of a side photographing optical system;
Fig. 4 is a block diagram illustrating a control system of the embodiment;
Fig. 5 is a flowchart describing the flow of operation of the production of spectacles in the embodiment;
Fig. 6 illustrates an example of a display screen of a display;
Fig. 7 illustrates an example of a screen displayed on the display after an end of the analysis of captured images;
Fig. 8 is a flowchart describing the operation of the adjustment of a fit;
Fig. 9 illustrates an example of a fit check screen; and
Fig. 10 illustrates an example of a screen displayed on the display after the end of the analysis of the captured images.

### DETAILED DESCRIPTION

In the following detailed description, for purpose of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

### <Overview>

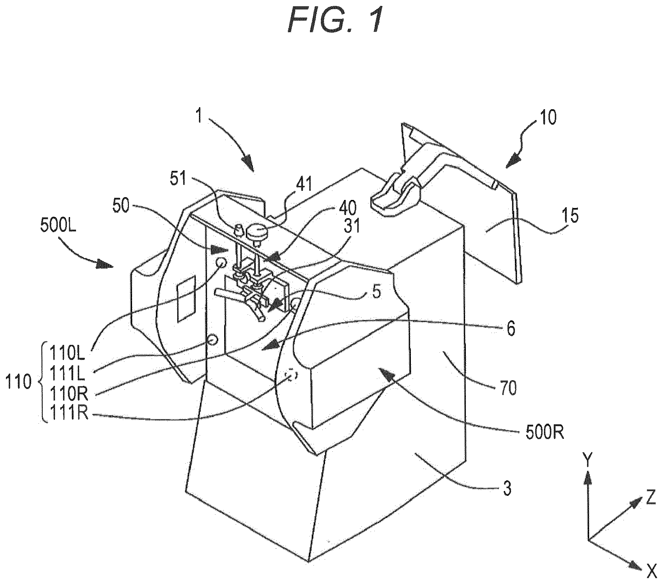

The embodiment is described hereinafter with reference to the drawings. The configuration of a spectacle wearing image analysis apparatus according to the embodiment is described with reference to Figs. 1 to 10. In the following description, let the right-left direction of an examinee be the X-axis direction, let the up-down direction of the examinee be the Y-axis direction, and let the front-back direction of the examinee be the Z-axis direction.

In the embodiment, for example, the spectacle wearing image analysis apparatus (for example, a spectacle wearing image analysis apparatus 1) is used to analyze an image of an examinee wearing spectacles and measure spectacle wearing parameters of the examinee.

For example, the spectacle wearing image analysis apparatus includes acquisition means (for example, a controller 70) and control means (for example, the controller 70). In the embodiment, for example, the acquisition means may also serve as the control means. Naturally, the acquisition means and the control means may be provided separately.

For example, the acquisition means acquires first wear data obtained by photographing an examinee wearing a spectacle frame at a first timing, and second wear data obtained by photographing the examinee wearing the spectacle frame at a second timing different from the first timing. The examinee wearing the spectacle frame is photographed by, for example, a photographing apparatus (for example, the spectacle wearing image analysis apparatus 1).

For example, the control means outputs comparison information for comparing the first wear data and the second wear data. In the embodiment, the case where the control means outputs the comparison information for comparing the first wear data and the second wear data is illustrated as an example. However, the control means may be configured in such a manner as to output comparison information for comparing two or more sets of wear data. For example, the control means may be configured in such a manner as to output comparison information for comparing the first wear data, the second wear data, and third wear data.

For example, the first wear data obtained by photographing the examinee wearing the spectacle frame at the first timing (for example, before the completion of the spectacles (before lenses are put in the frame)), and the second wear data obtained by photographing the examinee wearing the spectacle frame at the second timing (for example, after the completion of the spectacles (after the lenses are put in the frame)) different from the first timing are acquired in this manner. Furthermore, the comparison information for comparing the first wear data and the second wear data is output. Consequently, a processor can check the fit for the examinee on the basis of the comparison information. Furthermore, the processor can easily and suitably adjust the fit for the examinee.

Moreover, for example, the above configuration allows the processor to compare the first wear data photographed before the completion of the spectacles and the second wear data after the completion of the spectacles. In other words, the processor can easily reproduce the fit before the completion of the spectacles (at the time when first spectacle wearing parameters are calculated), even after the completion of the spectacles.

Moreover, there is also a case where, for example, the fit changes from the one at the completion of the spectacles while the examinee uses the produced spectacles for a fixed period of time, which makes the examinee uncomfortable with the spectacles on. Even in this case, the processor can easily check the difference between the current fit and the fit at the completion of the spectacles. Hence, the processor can easily reproduce the fit at the completion of the spectacles.

Moreover, for example, the above configuration allows the processor to compare the wearing parameters after the adjustment of the fit, which were acquired at the timings different from each other. Hence, the above configuration can be used to improve the processor's fitting skill. In other words, the processor himself/herself or another processor (for example, a skilled processor) can compare the wearing parameters acquired when the fit was adjusted in the past and the wearing parameters acquired when the processor adjusts the fit at present. Hence, the processor can check whether or not there is a large difference in the adjustment of the fit on the basis of a result of comparing the wearing parameters. Hence, the processor can go through fit adjustment training for processors to cause the processor to reproduce a certain fit.

The first wear data and the second wear data may be stored in, for example, a storage (for example, a memory 72) of the spectacle wearing image analysis apparatus. The storage may be provided in the spectacle wearing image analysis apparatus, or may be provided separately outside the spectacle wearing image analysis apparatus. For example, the first wear data and the second wear data may be processed by the control means without being stored in the storage.

The photographing apparatus of the spectacle wearing image analysis apparatus may also serve as the acquisition means. In other words, the photographing apparatus may be configured in such a manner as to acquire the first wear data and the second wear data by photographing the examinee wearing the spectacle frame. Moreover, the acquisition means may be configured in such a manner as to acquire the first wear data and the second wear data by, for example, receiving the first wear data and the second wear data. In this case, the acquisition means may be configured in such a manner as to acquire the first wear data and the second wear data by, for example, the processor operating an operating unit (for example, an operating unit 10) to input the first wear data and the second wear data into the spectacle wearing image analysis apparatus, and the spectacle wearing image analysis apparatus receiving the input first and second wear data. Moreover, in this case, the acquisition means may be configured in such a manner as to acquire the first wear data and the second wear data by, for example, receiving the first and second wear data transferred from a separate and different apparatus.

For example, the first wear data and the second wear data are simply required to be obtained by at least photographing the examinee wearing the spectacle frame. For example, the examinee may be photographed with only a spectacle frame on. For example, the examinee with a spectacle frame having lenses therein may be photographed. For example, one of the first wear data and the second wear data may be obtained by photographing the examinee wearing only the spectacle frame, and the other may be obtained by photographing the examinee wearing the spectacle frame having the lenses therein.

The first wear data and the second wear data may be acquired on the basis of, for example, photographing with the same photographing apparatus. Moreover, the first wear data and the second wear data may be acquired on the basis of, for example, photographing with different photographing apparatuses. In this case, the different photographing apparatuses are preferably, for example, photographing apparatuses of the same kind (for example, the same model or the same apparatus structure).

The first wear data and the second wear data may be, for example, images. In this case, the acquisition means may include at least a first image obtained by photographing at the first timing, in the first wear data, and include at least a second image obtained by photographing at the second timing, in the second wear data. In this case, the control means may output the first and second images as the comparison information. Each of the first and second images may be a still image, a moving image, or a combination of a still image and a moving image.

The first and second images may be, for example, at least any of a front image (an image of the examinee captured from a front direction), a side image (an image of the examinee captured from a side direction (also including, for example, an oblique direction)), a downward image (an image of the examinee captured from above), and an upward image (an image of the examinee captured from below). If the comparison information to be output includes the first and second images, the processor can check the fit by comparing the first and second images. The processor can check the fit from the first and second images. Hence, it becomes easier to check the fit.

The first wear data and the second wear data may be, for example, spectacle wearing parameters calculated by analyzing images. In this case, for example, the acquisition means may include at least a first spectacle wearing parameter acquired by analyzing the first image, in the first wear data, and include at least a second spectacle wearing parameter acquired by analyzing the second image, in the second wear data. In this case, the control means may output the first and second spectacle wearing parameters as the comparison information.

If the comparison information to be output includes the first and second spectacle wearing parameters, the processor can check the fit by comparing the first and second spectacle wearing parameters. In this case, the processor can check the fit from a measurement result. Hence, the processor can check the fit in more detail. Consequently, the processor can adjust the fit with higher accuracy.

The first wear data and the second wear data may be, for example, images and spectacle wearing parameters calculated by analyzing the images. In this case, for example, the acquisition means may include at least the first image and the first spectacle wearing parameter acquired by analyzing the first image, in the first wear data, and include at least the second image and the second spectacle wearing parameter acquired by analyzing the second image, in the second wear data. In this case, the control means may output, as the comparison information, the first image, the first spectacle wearing parameter, the second image, and the second spectacle wearing parameter.

If the comparison information to be output includes the first image and first spectacle wearing parameter of the first wear data, and the second image and the second spectacle wearing parameter of the second wear data, the processor can check the fit by comparing the first image and first spectacle wearing parameter and the second image and second spectacle wearing parameter. The processor can check the fit while checking both of the image and the spectacle wearing parameter. Hence, the processor can check the fit more easily with higher accuracy.

The first and second spectacle wearing parameters may be, for example, information (parameters) related to the spectacle frame and the examinee, which is calculated by analyzing the first and second images, respectively.

The first and second spectacle wearing parameters may include, for example, examinee information. The examinee information may include, for example, pupil information (for example, the pupil positions, the pupil diameter, and the pupillary distance), and other part position information (for example, nose position information, mouth position information, and eyebrow position information). The first and second spectacle wearing parameters may include, for example, spectacle frame information. The spectacle frame information may include, for example, the width of the spectacle frame, the position of the spectacle frame (for example, an upper end position, a lower end position, a left end position, a right end position, and corner positions), and the pantoscopic angle of the spectacle frame. The first and second spectacle wearing parameters may include, for example, parameters calculated from the examinee information and the spectacle frame information. The parameters may include, for example, an eye position height (fitting point height), and a vertex distance.

For example, the control means may be configured in such a manner as to print the first wear data and the second wear data as the comparison information on the same print paper.

For example, the control means may acquire difference data by performing subtraction processing on the first wear data and the second wear data, and output the difference data as the comparison information. The difference data may be, for example, at least the subtraction result of the spectacle wearing parameters or a displacement of a specific portion (for example, a predetermined portion of the spectacle frame or a predetermined portion of the examinee). The control means may change the display format (for example, the color and pattern) of the difference data according to the displacement, and output the difference data. In this manner, for example, the control means acquires the difference data between the first wear data and the second wear data, and outputs the difference data as the comparison information; accordingly, the processor can easily check a change in fit.

For example, the control means may display the first wear data and the second wear data as the comparison information on a monitor (for example, a display 15). For example, various monitors (for example, a monitor of the spectacle wearing image analysis apparatus or a monitor of an external apparatus (for example, an external PC or mobile terminal)) may be used as the monitor.

For example, the first wear data and the second wear data as the comparison information are displayed on the monitor to enable the processor to quickly check the fit while viewing the display screen. Moreover, the processor can quickly check the fit while viewing the display screen, for example, after making readjustments after checking the fit.

The control means may output, for example, a plurality of pieces of comparison information.

For example, the control means may display the first wear data and the second wear data as the comparison information in parallel on the same screen when displaying the first wear data and the second wear data on the monitor. In this case, for example, the control means may display the first wear data in a first area (for example, a first area 60) on the screen, and the second wear data in a second area (for example, a second area 65), which is different from the first area, on the screen.

For example, the control means may display the first wear data and the second wear data as the comparison information in a switchable manner when displaying the first wear data and the second wear data on the monitor. In this case, for example, the control means may switch a display target between the first wear data and the second wear data in response to receipt of a switching signal. For example, the switching signal may be output in response to, for example, the processor's operation on the operating unit.

For example, the control means may superimpose and display the first wear data and the second wear data as the comparison information when displaying the first wear data and the second wear data on the monitor. In this case, for example, the control means matches the first wear data and the second wear data and adjusts relative positions of the first wear data and the second wear data. After the adjustment of the relative positions, the control means superimposes the first wear data and the second wear data by image processing and displays the data on the monitor. The control means may display the first wear data and the second wear data on the monitor in such a manner that they are at least partially superimposed and displayed.

For example, the control means may use the above parallel display, switching display, and superimposed display in combination when displaying, on the monitor, the first wear data and the second wear data as the comparison information.

The technology of the present disclosure is not limited to the apparatus described in the embodiment. For example, spectacle wearing image analysis software (program) that implements the functions of the embodiment can be supplied to a system or apparatus via a network or various storage media. It is also possible for a computer (for example, a CPU) of the system or apparatus to read and execute the program.

### <Embodiment>

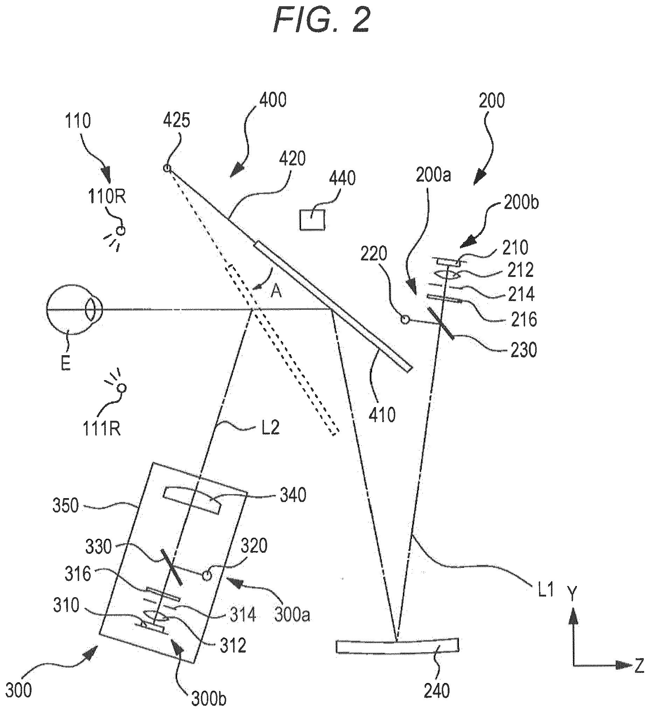

Fig. 1 is a schematic configuration diagram of the external appearance of the spectacle wearing image analysis apparatus 1 according to the embodiment. Fig. 2 is a schematic configuration diagram of optical systems accommodated in the spectacle wearing image analysis apparatus 1 according to the embodiment. The configuration of the spectacle wearing image analysis apparatus 1 according to the embodiment is described below with reference to Figs. 1 and 2. As illustrated in Fig. 1, the spectacle wearing image analysis apparatus 1 includes various measuring optical systems, a drive system, a control system, and the like, which are described below, inside an apparatus body 3 thereof. The apparatus body 3 includes a presentation window 6 on an examinee side. The presentation window 6 is a window that lets a fixation target light flux to pass through it when a fixation target is presented to an examinee. The apparatus body 3 includes a face support unit 5 on the examinee side likewise. The face support unit 5 is a unit to support the face of the examinee. The apparatus body 3 includes the operating unit (operating unit) 10 on a processor side.

### <Operating Unit>

The operating unit 10 outputs, to the controller 70 described below, a signal in accordance with an operation instruction input into the operating unit 10. The operating unit 10 used in the embodiment is the touchscreen display 15. In other words, in the embodiment, the operating unit also serves as the display. Naturally, the operating unit and the display may be provided as separate members. For example, the operating unit 10 may include at least any of operating means such as a mouse, a joystick, and a keyboard. The display 15 may be, for example, a display mounted on the body of the spectacle wearing image analysis apparatus 1, or a display connected to the body. Naturally, the display 15 does not need to be a touchscreen. The display 15 may be, for example, a display of a personal computer (hereinafter referred to as "PC"). Moreover, for example, a plurality of displays may be used in combination as the display 15. Various images including captured front images or side images in a distance viewing state and a near viewing state may be displayed on the display 15.

### <Face Support Unit>

The face support unit 5 supports the forehead of the examinee. The face support unit 5 sets certain distances between the measuring optical systems (for example, a distance measuring optical system 200, a near measuring optical system 300, and a reflective mirror 410) described below, and the examinee. Moreover, the face support unit 5 is rotatable in the right-left direction of the examinee and can adjust the orientation of the face of the examinee. Consequently, if the orientation of the face of the examinee deviates to the right or left, the face support unit 5 can be rotated to cause the face of the examinee to face the front.

The face support unit 5 mainly includes an abutment portion 31, an operating distance adjustment portion 40, and a lateral rotation adjustment portion 50. The abutment portion 31 is a portion that touches the face of the examinee. The operating distance adjustment portion 40 adjusts the position of the abutment portion 31 in the Z-axis direction to adjust the distances between the examinee and the measuring optical systems described below. In the embodiment, for example, the processor operates an adjustment knob 41 of the operating distance adjustment portion 40 to adjust the position of the abutment portion 31 in the Z-axis direction (operating distance direction). The lateral rotation adjustment portion (horizontal turn adjustment portion) 50 adjusts the angle of the abutment portion 31 in the right-left direction to cause the face of the examinee to face the front. In the embodiment, for example, the processor operates an adjustment knob 51 of the lateral rotation adjustment portion 50 to adjust the position of the abutment portion 31 in the right-left direction.

The face support unit 5 is not limited to the configuration of the embodiment. In the embodiment, the description is given assuming that the face support unit 5 supports the forehead of the examinee. However, the face support unit 5 may be configured in such a manner as to support the jaw, cheeks, nose, or the like of the examinee. The face support unit 5 is simply required to be configured in such a manner as to support the face of the examinee. Moreover, in the embodiment, the face support unit 5 is configured in such a manner as to adjust the position of the abutment portion 31 by the processor operating the adjustment knobs 41 and 51. However, the configuration of the face support unit 5 is not limited to this. The face support unit 5 may be configured in such a manner as to include a driver such as a motor and electrically adjust the position of the abutment portion 31 by, for example, the operation of the operating unit 10.

### <Optical Systems>

Next, the optical systems accommodated in the spectacle wearing image analysis apparatus 1 according to the embodiment are described with reference to Fig. 2. The spectacle wearing image analysis apparatus 1 of the embodiment mainly includes an illuminating optical system 110, the distance measuring optical system 200, the near measuring optical system 300, an optical path switching unit 400, and a side photographing optical system 500. Naturally, the spectacle wearing image analysis apparatus 1 does not need to include all of the above configurations.

In the embodiment, at least the distance measuring optical system 200 or the near measuring optical system 300 is used as the measuring optical system including photographing means for capturing an image of the examinee wearing spectacles to measure spectacle parameters. In the embodiment, the distance measuring optical system 200 and the near measuring optical system 300 are used to capture a front image of the examinee. Moreover, the side photographing optical system 500 is used to capture a side image of the examinee.

### <Illuminating Optical System>

The illuminating optical system 110 mainly includes four light sources 110R, 110L, 111R, and 111L (110L and 111L are omitted in Fig. 2). The illuminating optical system 110 illuminates the face of the examinee from four directions with the light sources 110R, 110L, 111R, and 111L. Naturally, the illuminating optical system 110 is not limited to the above configuration. The number of light sources can be any, and the arrangement of the light sources can also be arbitrary. The illuminating optical system 110 is simply required to be capable of illuminating the face of the examinee with the light sources. The illuminating optical system 110 may be provided, for example, below the face support unit 5 or above the presentation window 6.

Infrared light sources are used in the illuminating optical system 110 of the embodiment. The use of the infrared light source, an infrared filter described below, and the like enables the reduction of influence of disturbance light (such as natural light). However, the light source of the illuminating optical system 110 does not need to be an infrared light source, and may be a visible light source.

### <Distance Measuring Optical System>

The distance measuring optical system (hereinafter also referred to as the first measuring optical system) 200 is described using Fig. 2. The distance measuring optical system 200 is an optical system for measuring an eye position of an examinee's eye E in the distance viewing state with respect to the spectacle frame. The distance measuring optical system 200 is divided into a first fixation target projecting optical system 200a and a first imaging optical system 200b. Let a measurement light axis of the distance measuring optical system 200 be an optical axis L1.

The first fixation target projecting optical system 200a projects a distance fixation target for maintaining the distance viewing state of the examinee onto the examinee's eye E. The first fixation target projecting optical system 200a mainly includes a light source 220, a half mirror 230, and a concave mirror 240. The light source 220 functions as a fixation target to be projected onto the examinee's eye E. The concave mirror 240 substantially collimates a fixation target light flux emitted from the light source 220, and reflects the fixation target light flux. In the embodiment, the fixation target light flux emitted from the light source 220 is substantially collimated and then reflected. However, the embodiment is not limited to this. The fixation target light flux emitted from the light source 220 may be reflected in such a manner as to be presented at a predetermined distance presentation distance.

The fixation target light flux emitted from the light source 220 is reflected by the half mirror 230 and is made coaxial with the optical axis L1. The fixation target light flux reflected by the half mirror 230 is reflected by the concave mirror 240. The fixation target light flux reflected by the concave mirror 240 is reflected by the reflective mirror 410 described below, passes through the presentation window 6, and enters the examinee's eye E. The concave mirror 240 reflects the fixation target light flux in such a manner as to substantially collimate the fixation target light flux. Hence, the fixation target viewed from the examinee looks more distant than an actual distance between the examinee's eye E and the light source 220.

The first imaging optical system 200b photographs the face of the examinee in the distance viewing state from the front direction (a position facing the front of the face of the examinee). In the embodiment, the first imaging optical system 200b photographs the face of the examinee in the distance viewing state from the front position. Naturally, the first imaging optical system 200b may be configured in such a manner as to photograph the face of the examinee in the distance viewing state from obliquely below (an obliquely downward position) as the front direction. The face of the examinee to be photographed does not need to be the entire face of the examinee and indicates at least a surrounding area of the examinee's eye E. For example, part of the face of the examinee, including at least the left or right eye and the spectacle frame, may be photographed. The first imaging optical system 200b mainly includes an imaging device 210, an imaging lens 212, a diaphragm 214, an infrared filter 216, the half mirror 230, and the concave mirror 240.

Illuminating light from the illuminating optical system 110 is reflected by the face of the examinee, and passes through the presentation window 6. The illuminating light that has passed through the presentation window 6 is reflected by the reflective mirror 410. The reflected light reflected by the reflective mirror 410 is reflected by the concave mirror 240 and then passes through the half mirror 230 and the infrared filter 216. The infrared light that has passed through the infrared filter 216 passes through the diaphragm 214, is converged by the imaging lens 212, and then forms an image on the imaging device 210. The imaging device 210 is in a conjugate positional relation with the pupil of the examinee. The imaging device 210 detects light and outputs its detection signal to the controller 70.

### <Near Measuring Optical System>

The near measuring optical system (hereinafter also referred to as the second measuring optical system) 300 is an optical system for measuring the eye position of the examinee's eye E in the near viewing state with respect to the spectacle frame. The near measuring optical system 300 can be divided into a second fixation target projecting optical system 300a and a second imaging optical system 300b. Let a measurement light axis of the near measuring optical system 300 be an optical axis L2.

The second fixation target projecting optical system 300a projects a near fixation target for maintaining the near viewing state of the examinee onto the examinee's eye E from obliquely below. The second fixation target projecting optical system 300a mainly includes a light source 320, a half mirror 330, and a convex lens 340. The light source 320 functions as a fixation target to be projected onto the examinee's eye E.

A fixation target light flux emitted from the light source 320 is reflected by the half mirror 330 and made coaxial with the optical axis L2. The fixation target light flux reflected by the half mirror 330 passes through the convex lens 340 and is converged. The fixation target light flux is then reflected by the reflective mirror 410 described below, passes through the presentation window 6, and enters the examinee's eye E.

The second imaging optical system 300b photographs the face of the examinee in the near viewing state from the front direction (a position facing the front of the face of the examinee). In the embodiment, the second imaging optical system 300b photographs the face of the examinee in the near viewing state from obliquely below (an obliquely downward position). Naturally, the second imaging optical system 300b may be configured in such a manner as to photograph the face of the examinee in the near viewing state from the front position as the front direction. The second imaging optical system 300b mainly includes an imaging device 310, an imaging lens 312, a diaphragm 314, an infrared filter 316, the half mirror 330, and the convex lens 340.

The illuminating light from the illuminating optical system 110, which illuminates the face of the examinee, passes through the presentation window 6, and is reflected by the reflective mirror 410. The reflected light reflected by the reflective mirror 410 passes through the convex lens and is converged. The converged light flux passes through the half mirror 330 and the infrared filter 316. The infrared light that has passed through the infrared filter 316 passes through the diaphragm 314, is converged by the imaging lens 312, and then forms an image on the imaging device 310. The imaging device 310 is in a conjugate positional relation with the pupil of the examinee. The imaging device 310 detects light and outputs its detection signal to the controller 70.

### <Optical System Moving Unit>

The near measuring optical system 300 includes an optical system moving unit 350. The optical system moving unit 350 holds the near measuring optical system 300 in a movable manner. The optical system moving unit 350 can move the entire near measuring optical system 300 as the angle of the reflective mirror 410 described below is changed at the time of a near measurement.

When the optical path switching unit 400 described below changes the angle of the reflective mirror 410, an optical path (a target presentation distance) of the second fixation target projecting optical system 300a and an optical path of the second imaging optical system 300b change. Hence, the optical system moving unit 350 of the embodiment moves the entire near measuring optical system 300 as the angle of the reflective mirror 410 is changed. Consequently, even if the angle of the reflective mirror 410 is changed, a near target presentation distance is maintained. Moreover, the focus of the second imaging optical system 300b on the examinee's eye E is maintained.

Moreover, the optical system moving unit 350 can move the convex lens 340 for adjusting the presentation distance and the light source 320 for projecting the fixation target separately. Consequently, the optical system moving unit 350 can change the fixation target presentation distance by changing a relative distance between the convex lens 340 and the light source 320. The optical system moving unit 350 may include, for example, an unillustrated driver such as a motor. In this case, the optical system moving unit 350 drives the driver to move the optical members.

### <Optical Path Switching Unit>

The optical path switching unit 400 is described using Fig. 2. The optical path switching unit 400 switches the optical path of the distance measuring optical system 200 and the optical path of the near measuring optical system 300. Moreover, the optical path switching unit 400 changes the direction of the visual line of the examinee at the time of a near measurement.

The optical path switching unit 400 mainly includes the reflective mirror 410, a mirror holder 420, and a driver 440.

The reflective mirror 410 is held by the mirror holder 420. A rotary shaft 425 fixed to the spectacle wearing image analysis apparatus 1 holds an upper portion of the mirror holder 420. The mirror holder 420 is pivotable on a rotation axis of the rotary shaft 425. At this point in time, the mirror holder 420 pivots integrally with the reflective mirror 410. The reflective mirror 410 reflects, toward the examinee's eye E, a target light flux emitted from the distance measuring optical system 200 or the near measuring optical system 300. The driver 440 is coupled to a rear surface of the mirror holder 420 by an unillustrated linkage mechanism. The driver 440 is driven to transmit a driving force of the driver to the mirror holder 420 via the unillustrated linkage mechanism. The mirror holder 420 pivots on the rotary shaft 425 by the driving force transmitted from the linkage mechanism. The mirror holder pivots to cause the reflective mirror 410 to pivot on the rotary shaft 425 and move.

The reflective mirror 410 is caused to pivot to change the optical path of the target light flux and change the presentation position of the fixation target to be projected onto the examinee's eye E. The fixation target presentation position is changed to change the direction of the visual line of the examinee. For example, the reflective mirror 410 pivots in direction A (the reflective mirror 410 is moved from a solid line part to a dotted line part) to switch the optical path for photographing the examinee from the optical path of the distance measuring optical system 200 to the optical path of the near measuring optical system 300. In this manner, the optical path switching unit 400 causes the reflective mirror 410 to pivot to change the fixation target presentation position and change the direction of the visual line of the examinee in the up-down direction.

### <Side photographing Optical System>

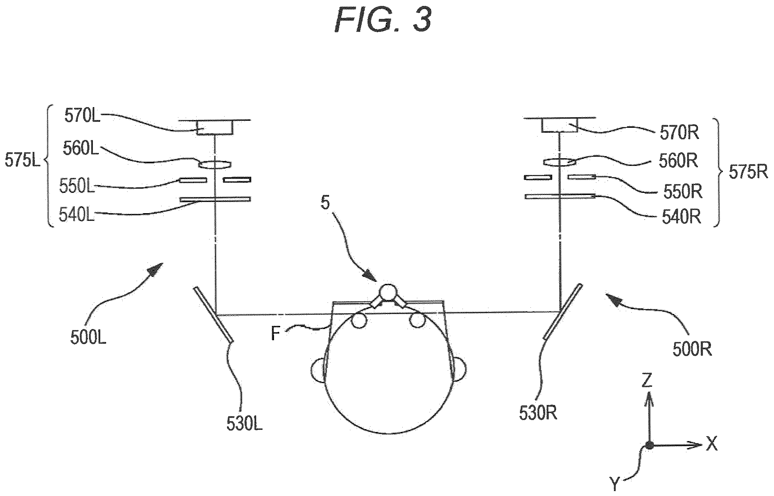

Fig. 3 illustrates a schematic configuration diagram of the side photographing optical system 500. The side photographing optical system 500 photographs the examinee from a side to acquire a side image of the examinee. As illustrated in Fig. 3, the side photographing optical system 500 is fixed in the right-left direction with respect to the position where the face of the examinee is supported.

The side photographing optical system 500 of the embodiment is broadly divided into a left photographing optical system 500L placed to the left of the examinee, and a right photographing optical system 500R placed to the right of the examinee. The left photographing optical system 500L photographs the examinee from the left. The right photographing optical system 500R photographs the examinee from the right.

The left photographing optical system 500L mainly includes a half mirror 530L, an infrared filter 540L, a diaphragm 550L, an imaging lens 560L, and an imaging device 570L.

Similarly, the right photographing optical system 500R mainly includes a half mirror 530R, an infrared filter 540R, a diaphragm 550R, an imaging lens 560R, and an imaging device 570R. In the following description, the infrared filters 540L and 540R, the diaphragms 550L and 550R, the imaging lenses 560L and 560R, and the imaging device 570L and 570R be collectively described as imagers 575L and 575R for convenience' sake.

The infrared filters 540L and 540R absorb visible light and transmit infrared light. The imaging devices 570L and 570R receive the infrared light that has passed through the infrared filters 540L and 540R.

The capture of a side image is described below taking the left photographing optical system 500L as an example. The illuminating light flux from the illuminating optical system 100 is reflected by the face of the examinee and a spectacle frame F. The reflected illuminating light flux enters the left photographing optical system 500L. The illuminating light flux is then reflected by the half mirror 530L. The reflected light flux reflected by the half mirror 530L passes through the infrared filter 540L. After passing through the diaphragm 550L, the infrared light that has passed through the infrared filter 540L is condensed by the imaging lens 560L, and forms an image on an imaging surface of the imaging device 570L. The imaging device 570L transmits the detected captured image to the controller 70. In this manner, the left photographing optical system 500L captures the side image of the left side of the examinee. Moreover, as in the left photographing optical system 500L, the right photographing optical system 500R captures a side image of the right side of the examinee.

### <Controller>

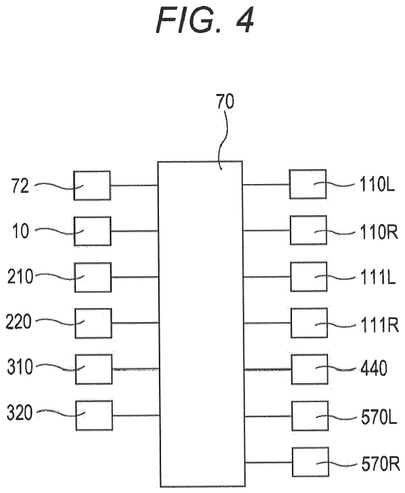

Fig. 4 is a block diagram illustrating the control system of the embodiment. The controller 70 includes a CPU (processor), a RAM, and a ROM. The CPU of the controller 70 is responsible for control over the spectacle wearing image analysis apparatus 1. Various pieces of information are temporarily stored in the RAM. Various programs, initial values, and the like for controlling the operation of the spectacle wearing image analysis apparatus 1 are stored in the ROM of the controller 70.

The controller 70 is electrically connected to the nonvolatile memory (hereinafter referred to as memory) 72, the operating unit 10, the light sources 110L, 110R, 111L, 111R, 220, and 320, the imaging devices 210, 310, 570L, and 570R, the driver of the optical system moving unit 350, the driver 440, and the like.

The memory 72 is a non-transitory storage medium that can maintain storage contents even if the supply of power is interrupted. For example, a hard disk drive, a flash ROM, and a USB memory to be detachably mounted in the spectacle wearing image analysis apparatus 1 can be used as the memory 72. A photographing control program for controlling the capture of a distance viewing image (a front image in the distance viewing state) or a near viewing image (a front image in the near viewing state), and side images with the spectacle wearing image analysis apparatus 1 is stored in the memory 72. Furthermore, an image processing program for processing the distance viewing image or near viewing image, and the side images is stored in the memory 72. Moreover, various pieces of information related to photographing, such as information on photographing positions of the captured distance viewing image or near viewing image, and side images are stored in the memory 72. The processor inputs various operation instructions into the operating unit 10.

### <Spectacle Production Operation>

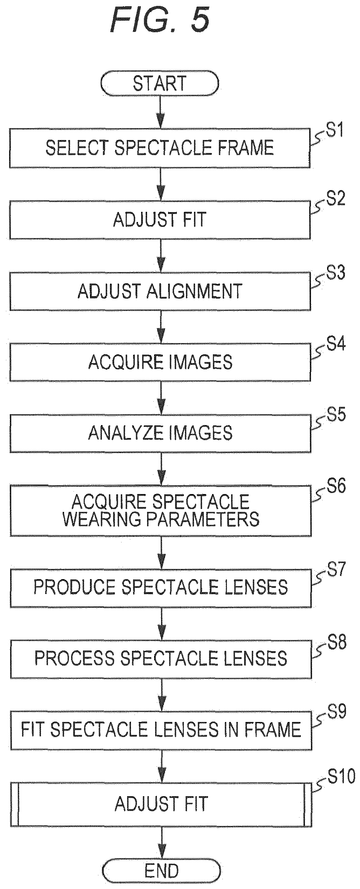

The operation of spectacles production using the spectacle wearing image analysis apparatus 1 in the embodiment is described below with reference to Fig. 5. Fig. 5 is a flowchart describing the flow of operation of the production of spectacles in the embodiment. In the embodiment, control over acquisition of images and spectacle wearing parameters is described, taking, as an example, a case where spectacle wearing parameters are acquired from images of the examinee in the distance viewing state. Images and spectacle wearing parameters of the examinee in the near viewing state may be acquired under similar control to the case of the distance viewing state.

In the embodiment, for example, the controller 70 acquires the first wear data obtained by photographing the examinee wearing the spectacle frame at the first timing, and the second wear data obtained by photographing the examinee wearing the spectacle frame at the second timing different from the first timing. Furthermore, the controller 70 outputs the comparison information for comparing the first wear data and the second wear data. In the embodiment, a case where the first wear data and the second wear data include images and spectacle wearing parameters calculated by analyzing the images, and they are output (displayed) as the comparison information is described as an example.

### <Selection of Spectacle Frame (S1)>

For example, the examinee selects a desired spectacle frame from various spectacle frames (S1). The spectacle frame may be one with spectacle lenses (for example, demo lenses) therein or one without spectacle lenses.

### <Adjustment of Fit (S2)>

Next, for example, the processor prompts the examinee to put on the spectacle frame selected by the examinee. For example, after the examinee puts on the spectacle frame, the processor changes a relative position of the spectacle frame to the examinee to adjust the fit (S2). For example, the processor adjusts a relationship between the nose pad position of the spectacle frame and the nose position of the examinee and also adjusts a relationship between the temple positions of the spectacle frame and the ear positions of the examinee. The fit may be adjusted by deforming spectacle lenses.

### <Alignment Adjustment (S3)>

For example, after the completion of the adjustment of the fit, the processor makes adjustments to photograph the examinee. For example, the processor operates the operating unit 10 to set a photographing mode to a distance photographing mode. For example, in distance photographing mode, the controller 70 controls various optical systems to capture an image of the examinee in the distance viewing state.

If the photographing mode is set to, for example, the distance photographing mode, the controller 70 controls the drive of the driver 440 to set an angle θ of the reflective mirror 410 of the optical path switching unit 400 at an angle corresponding to the distance photographing mode (for example, 40° with respect to the horizontal plane (X-Z plane) direction). The reflective mirror 410 inclined at the angle corresponding to the distance photographing mode projects a fixation target light flux from the light source 220 horizontally with respect to the examinee's eye E.

The processor prompts the examinee to be at the face support unit 5. The processor adjusts the face support unit 5 in such a manner that the face of the examinee is placed in a predetermined position with respect to the spectacle wearing image analysis apparatus 1. In other words, the processor adjusts alignment (S3).

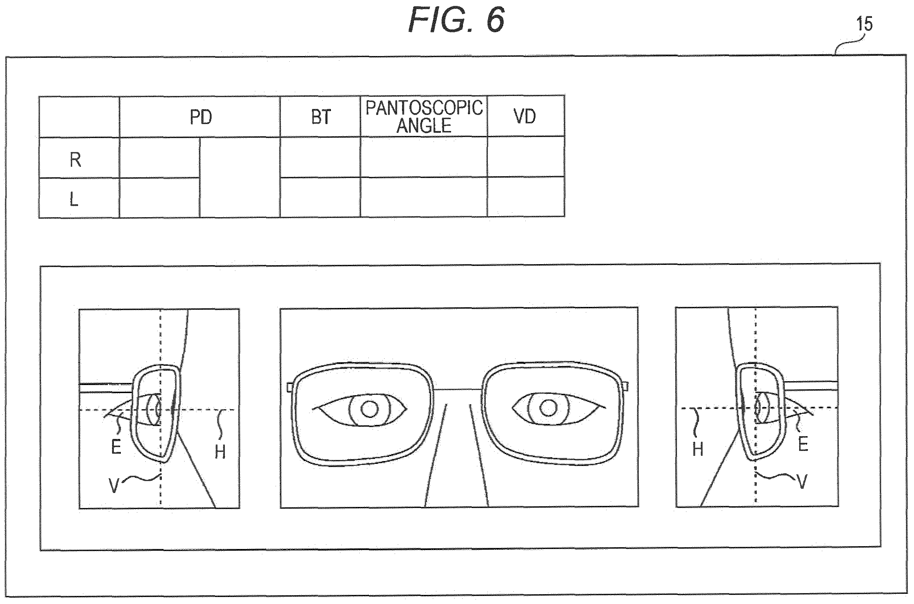

Fig. 6 illustrates an example of a display screen of the display 15. In the embodiment, for example, the distance between the examinee and the spectacle wearing image analysis apparatus 1 is adjusted in such a manner as to display the corneal apex of the examinee's eye E at a predetermined position on the display 15. In the embodiment, reference lines V and H for indicating the center of the image captured by the side photographing optical system 500 are displayed on side screens of the display 15. In the embodiment, it is set in such a manner that the alignment position is appropriate when an intersection point of the reference lines V and H agrees with the corneal apex. The processor adjusts alignment while checking an image of the face of the examinee (examinee's face), which are displayed on the display 15.

### <Image Acquisition (S4)>

When the alignment adjustment of the examinee is complete, the processor touches an unillustrated photographing button displayed on the display 15. When the photographing button has been touched, the controller 70 captures images (a front image and side images) of the examinee in the distance viewing state (S4; acquisition step). As described above, the images of the distance viewing state are acquired.

### <Image Analysis Process (S5) and Acquisition of Spectacle Wearing Parameters (S6)>

For example, when the images have been acquired, the controller 70 performs an analysis process on the acquired images (S5; acquisition step). For example, the controller 70 detects spectacle frame information, the examinee's pupil information, and the like in image analysis. The controller 70 then calculates spectacle wearing parameters of the examinee's eye E for the spectacle frame on the basis of the detection result (S6; acquisition step). In the embodiment, when the images have been acquired, the analysis of the images is started. However, the embodiment is not limited to this. For example, the controller 70 may be set in such a manner as to start the analysis of images at the processor's instruction. For example, the processor operates the operating unit 10 to select an unillustrated image analysis mode. When the processor has selected the image analysis mode, the controller 70 starts the image analysis process.

An analysis process method is described below. For example, the controller 70 selects an analysis process method first in accordance with the selected spectacle frame type (for example, a full or half rim). Next, the controller 70 scans the image of the examinee sequentially in the X and Y directions. Consequently, the controller 70 acquires the luminance distribution of the image. The controller 70 detects an edge of the spectacle frame using the selected analysis process method on the basis of the acquired luminance distribution. For example, the controller 70 detects the edge on the basis of whether or not the amount of change in luminance between adjacent pixels in the acquired luminance distribution exceeds a predetermined threshold. Naturally, the controller 70 may be configured in such a manner as to detect the edge on the basis of whether or not the luminance value of each pixel exceeds a predetermined value. For example, the controller 70 detects a portion of the image where the amount of change in luminance exceeds the predetermined threshold as the edge of the spectacle frame in the image. The controller 70 detects the detected edge as the spectacle frame position.

As described above, the image analysis process based on the spectacle frame type is performed to suitably detect the spectacle frame position. In the embodiment, at the time of edge detection, image processing by the analysis process method using a threshold is performed. However, the embodiment is not limited to this. The controller 70 may be configured in such a manner as to use, for example, a different analysis process method.

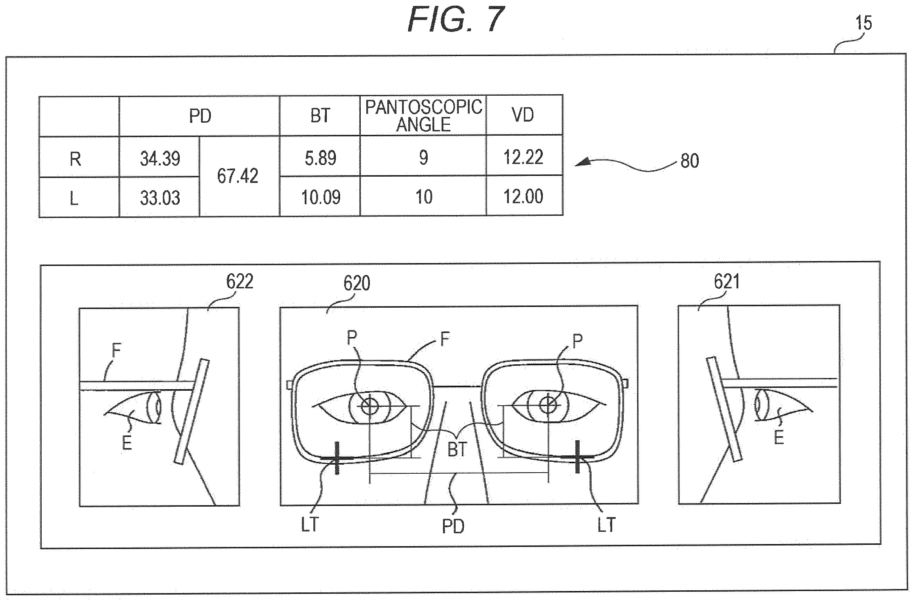

Fig. 7 illustrates an example of a screen displayed on the display 15 after an end of the analysis of captured images. As illustrated in Fig. 7, for example, the controller 70 displays captured images such as a front image 620, a left side image 621, and a right side image 622.

The front image 620 includes, for example, a front image of both eyes of the examinee and the spectacle frame. Naturally, the front image 620 may include a front image of the left or right eye and the spectacle frame.

The left side image 621 is a left side image (side image) of the face of the examinee, which was captured by the left photographing optical system 500L. Conversely, the left side image 621 is an image of the examinee when viewed from the right for the processor facing the examinee. The left side image 621 includes an image of the left eye of the examinee and the left side of the spectacle frame.

The right side image 622 is a right side image (side image) of the face of the examinee, which was captured by the right photographing optical system 500R. Conversely, the right side image 622 is an image of the examinee when viewed from the left for the processor facing the examinee. The right side image 622 includes an image of the right eye of the examinee and the right side of the spectacle frame.

For example, the controller 70 acquires spectacle wearing parameters on the basis of the detection result detected in the image analysis (the image analysis result). The spectacle wearing parameters include, for example, at least any of a spectacle frame position, pupil positions of the examinee, an eye position height (BT), a pupillary distance in the distance viewing state (PD), an interval between the eye and the back surface of the lens (vertex distance; VD), and a spectacle frame pantoscopic angle (pantoscopic angle).

Furthermore, the controller 70 superimposes and displays targets that match the spectacle wearing parameters on the captured images of the display 15. For example, the controller 70 superimposes and displays a target in the spectacle frame position on the captured images of the display 15. Moreover, the controller 70 detects the pupil positions of the examinee by the image analysis process, and superimposes and displays targets on the pupil positions of the examinee on the captured images.

For example, the controller 70 displays the target indicating the spectacle frame position (a spectacle frame position target), the targets indicating the pupil positions of the examinee (the pupil position targets) P, and the like. For example, the targets are displayed in various display formats, such as a cross mark and a line, on the display 15.

In the embodiment, a case where targets LT of lens lower ends being predetermined positions within the spectacle frame are displayed as the spectacle frame position target is taken as an example. Naturally, the spectacle frame position corresponding to the targets is not limited to the lens lower ends. The spectacle frame position is simply required to be a portion related to the spectacle frame. The spectacle frame position may be, for example, the position of the entire spectacle frame. Moreover, the spectacle frame position may be, for example, the upper end of the lens (the upper end of the spectacle frame) being a predetermined portion within the spectacle frame, the bridge of the spectacle frame, or the like.

Moreover, for example, a target BT indicating the eye position height (the eye position height target), a target PD indicating the pupillary distance in the distance viewing state (the pupillary distance target), the interval between the eye and the back surface of the lens (vertex distance; VD), and the like, which were calculated on the basis of the detection result, are superimposed and displayed on the captured images of the display 15. For example, the pupillary distance PD is the distance between the centers of the right and left pupils. Moreover, the targets of, for example, the eye position height and the pupillary distance, which were calculated on the basis of the detection result, are displayed, and also their measurement values are displayed on the display screen of the display 15. For example, the measurement values of the eye position height, the pupillary distance, and the like are presented in a measurement value display field 80 of the display 15.

As described above, the spectacle wearing parameters can be suitably acquired by acquiring the spectacle wearing parameters on the basis of the spectacle frame type in the analysis process at the time of the acquisition of the spectacle wearing parameters. The spectacle wearing parameters to be calculated are not limited only to the above result. It may be configured in such a manner as to calculate various spectacle wearing parameters.

For example, the controller 70 stores, in the memory 72, the captured images and the spectacle wearing parameters acquired by the analysis. The controller 70 stores, in the memory 72, the captured images and the spectacle wearing parameters acquired by the analysis in response to, for example, the processor's selection of an unillustrated wear data storage switch. Naturally, the controller 70 may be configured in such a manner as to automatically store, in the memory, the captured images and the spectacle wearing parameters acquired by the analysis.

In the embodiment, for example, the controller 70 stores the captured images and the spectacle wearing parameters as the first wear data in the memory 72 when the processor has selected the unillustrated wear data storage switch. The controller 70 sets the captured images and the spectacle wearing parameters, which are included in the first wear data, as the first captured images (first images) and the first spectacle wearing parameters. Furthermore, the controller 70 sets a front image 620a, a left side image 621 a, a right side image 622a, and the like, which are included in the first captured images, as a first front image 620a, a first left side image 621a, a first right side image 622a, and the like.

When they are stored as the first wear data in the memory 72, for example, the controller 70 displays, on the display 15, an input field into which an examinee ID can be input, and prompts the processor to input the examinee ID. For example, when the processor has input the examinee ID, the examinee ID is associated with the first wear data, and stored in the memory 72. Consequently, it is possible to identify an examinee to whom the first wear data belongs. The embodiment illustrates an example where the examinee ID is input as an identifier for identifying wear data. However, the embodiment is not limited to this. For example, the identifier is simply required to be information that allows an examinee to be identified. For example, the name, photograph, or the like of the examinee may be input as the identifier.

### <Production of Spectacle Lenses (S7)>

When the first wear data is acquired, spectacle lenses are produced on the basis of the first wear data (S7). The first wear data may include the first captured images and the first spectacle wearing parameters of the examinee in the near viewing state. In the embodiment, a description is given taking, as an example, the case where spectacle lenses are produced on the basis of the first wear data. However, the embodiment is not limited to this. For example, the spectacle lenses may not be produced on the basis of the first wear data. In this case, for example, appropriate spectacle lenses may be selected from available spectacle lenses (for example, available spectacle lenses possessed by an eyeglass store) on the basis of the first wear data. Moreover, for example, processing data for processing the spectacle lenses, which is described below, may be corrected on the basis of the first wear data.

When the spectacle lenses are produced on the basis of the first wear data, for example, the processor selects an unillustrated transmission switch to transmit the first wear data to an external apparatus provided in a production factory that produces spectacle lenses. For example, a transmission apparatus for transmitting the first wear data to the external apparatus may be configured in such a manner as to be connected to the spectacle wearing image analysis apparatus 1 in a wired manner, or configured in such a manner as to be capable of, for example, wirelessly communicating with the spectacle wearing image analysis apparatus 1. Alternatively, the transmission apparatus may be configured in such a manner as to include a flash ROM, a USB memory, or the like where the first wear data is stored, and cause the external apparatus to receive the first wear data. If, for example, a flash ROM, a USB memory, or the like is used as the transmission apparatus, the processor connects the flash ROM, the USB memory, or the like where the acquired first wear data is stored to the external apparatus to cause the external apparatus to acquire the data. The first wear data is stored in a memory of the external apparatus.

For example, the first wear data is received by receiving means of the external apparatus of the production factory. For example, the spectacle lenses are designed and produced in the production factory on the basis of the first wear data. If, for example, the spectacle lenses are produced on the basis of the first wear data, the produced spectacle lenses are delivered to the processor. In the embodiment, a description is given taking, as an example, the case where the spectacle lenses are produced in the production factory. However, the embodiment is not limited to this. The spectacle lenses may be produced in, for example, a place where the spectacle wearing image analysis apparatus is installed (for example, an eyeglass store or a factory).

### <Processing of Spectacle Lenses (S8)>

When having received the produced spectacle lenses, the processor processes the outer edge of the spectacle lens with a spectacle lens processing apparatus. For example, the processor sets various parameters (for example, layout data and shape data) for processing the spectacle lenses on the spectacle lens processing apparatus. For example, the spectacle lens processing apparatus processes the spectacle lenses on the basis of the set parameters. For example, the various parameters for processing the spectacle lenses may be set on the basis of the first wear data. Moreover, for example, the various parameters for processing the spectacle lenses may be corrected on the basis of the first wear data. If, for example, the spectacle lenses are processed using the first wear data, the processor may input the examinee ID on a wear data call screen to call the first wear data from the memory 72.

### <Fitting of Spectacle Lenses (S9)>

When the processing of the spectacle lenses has been completed, the processor puts the spectacle lenses in the spectacle frame that was worn by the examinee when the first wear data was acquired. In other words, the processor fits the spectacle lenses in the frame (S9).

### <Adjustment of Fit (S10)>

Next, the processor prompts the examinee to put on the spectacle frame with the spectacle lenses therein to adjust the fit (S10). In the embodiment, for example, the processor adjusts the fit while checking, on a fit check screen, the fit at the time of the acquisition of the first wear data (the fit adjusted by the adjustment of the fit (S2)), and the adjustment of the fit after the fitting of the spectacle lenses (S9).

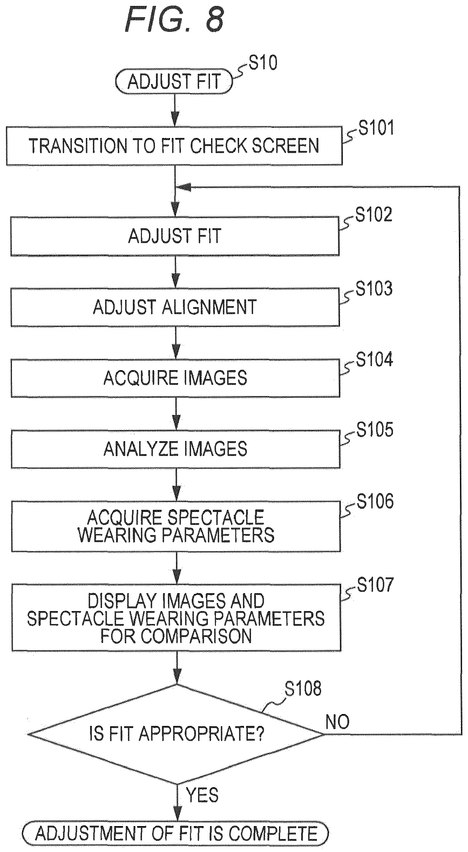

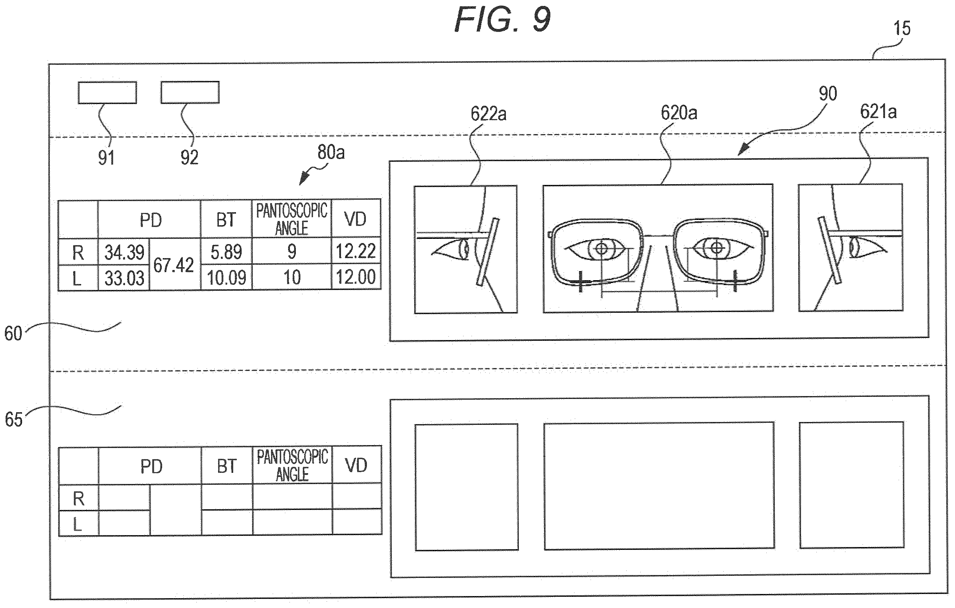

The adjustment of the fit is described in detail below. Fig. 8 is a flowchart describing the operation of the adjustment of the fit. Fig. 9 is a diagram illustrating an example of the fit check screen. For example, the controller 70 switches the display screen of the display 15 to the fit check screen by the processor selecting an unillustrated changeover switch (S101). For example, the processor selects a wear data call switch 91 illustrated in Fig. 9, on the fit check screen. When, for example, the wear data call switch 91 has been selected, the controller 70 displays an examinee ID input screen. For example, the processor inputs, on the examinee ID input screen, the examinee ID that was input when the first wear data was stored in the memory 72. When, for example, the examinee ID has been input, the controller 70 calls the first wear data from the memory 72, and displays it in the first area 60 on the fit check screen. Naturally, the area where the first wear data is displayed is not limited to the first area 60. The first wear data may be displayed in, for example, a different area (for example, the second area 65). For example, a list of examinee IDs is displayed to allow the processor to select one of them when the first wear data is called.

In the embodiment, for example, the first captured images and first spectacle wearing parameters of the first wear data are displayed as the comparison information. As illustrated in Fig. 9, the first captured images (first images) of the first wear data are displayed in, for example, an image display field 90 on the fit check screen displayed on the display 15. For example, the captured images such as the first front image 620a, the first left side image 621a, and the first right side image 622a are displayed as the first captured images. Moreover, the first spectacle wearing parameters of the first wear data are displayed in, for example, a measurement value display field 80a on the fit check screen. The display layout of the first wear data is not limited to this. The first wear data may be displayed in any layout.

After calling the first wear data, for example, the processor prompts the examinee to put on the spectacle frame with the spectacle lenses therein. After the examiner puts on the spectacle frame, for example, the processor adjusts the fit by changing the relative position of the spectacle frame to the examinee (S102). For example, the adjustment of the fit (S102) is performed as in the above adjustment of the fit (S2).

After the completion of the adjustment of the fit, for example, the processor makes adjustments to photograph the examinee. For example, the processor selects a photographing screen changeover switch 92 on the fit check screen. For example, the controller 70 switches the fit check screen to a photographing screen when the photographing screen changeover switch 92 has been selected. Consequently, it enters a state where an image can be captured. For example, the processor prompts the examinee to be at the face support unit 5. The processor adjusts the face support unit 5 in such a manner that the face of the examinee is placed in the predetermined position with respect to the spectacle wearing image analysis apparatus 1. In other words, the processor adjusts alignment (S103). The alignment adjustment (S103) is made as in the above alignment adjustment (S3).

When the alignment adjustment of the examinee has been completed, for example, the processor touches an unillustrated photographing button displayed on the display 15. When the photographing button has been touched, the controller 70 captures images (front image and side images) of the examinee in the distance viewing state (S104; acquisition step).

When the images have been acquired, for example, the controller 70 performs the analysis process on the acquired images (S105; acquisition step). For example, the image analysis process (S105) is performed as in the above image analysis process (S5). The controller 70 then calculates the spectacle wearing parameters of the examinee's eye E for the spectacle frame on the basis of the detection result (S106; acquisition step). For example, the acquisition of the spectacle wearing parameters (S106) is performed as in the above acquisition of the spectacle wearing parameters (S6).

For example, the controller 70 stores, in the memory 72, the captured images and the spectacle wearing parameters acquired by the analysis. For example, the controller 70 stores, in the memory 72, the captured images and the spectacle wearing parameters acquired by the analysis in response to the processor's selection of the unillustrated wear data storage switch. Naturally, the controller 70 may be configured in such a manner as to automatically store, in the memory, the captured images and the spectacle wearing parameters acquired by the analysis.

In the embodiment, when the processor has selected the unillustrated wear data storage switch, for example, the controller 70 stores the captured images and the spectacle wearing parameters as the second wear data in the memory 72. After storing the second wear data in the memory 72, the controller 70 switches the display screen of the display 15 to the fit check screen. Naturally, the controller 70 may be configured in such a manner as to switch the display screen to the fit check screen in response to the processor's selection of the changeover switch.

The controller 70 sets the captured images and the spectacle wearing parameters, which are included in the second wear data, as the second captured images (second images) and the second spectacle wearing parameters. Furthermore, the controller 70 sets a front image 620b, a left side image 621b, a right side image 622b, and the like, which are included in the second captured images, as a second front image 620b, a second left side image 621b, a second right side image 622b, and the like.

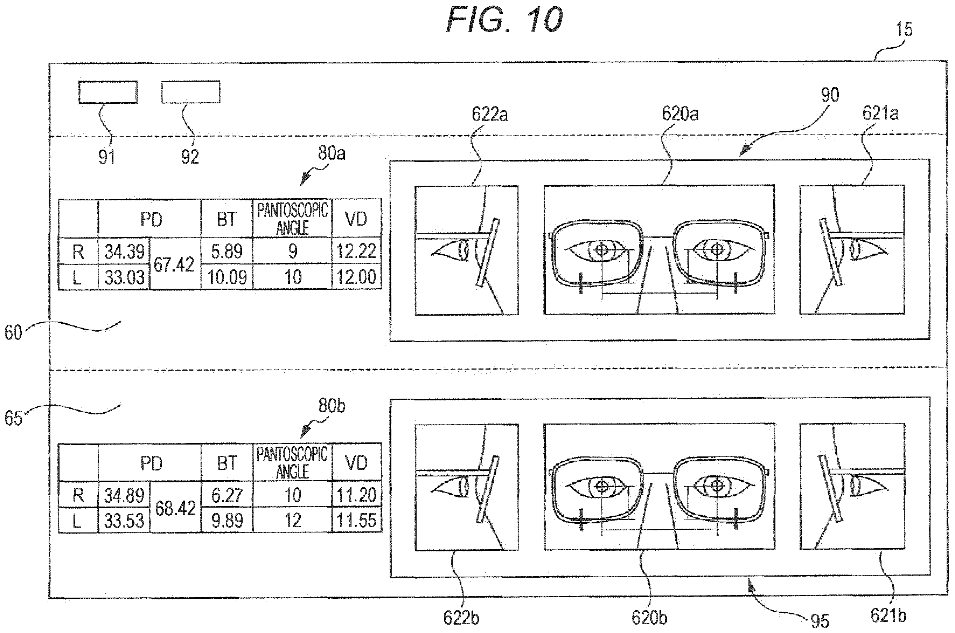

Fig. 10 illustrates an example of the fit check screen after the acquisition of the second wear data. For example, after switching the display screen to the fit check screen, the controller 70 calls the second wear data from the memory 72, and displays the second wear data as the comparison information in the second area 65 of the fit check screen. The embodiment illustrates an example where the second wear data is stored in the memory 72. However, the embodiment is not limited to this. For example, the controller 70 may be configured in such a manner as to display the second wear data in the second area 65 on the fit check screen after switching to the fit check screen without storing the second wear data in the memory 72. In the embodiment, the first wear data is called on the fit check screen to determine that the second wear data is wear data of the same examinee as the first wear data and store the second wear data. Naturally, for example, the controller 70 may be configured in such a manner as to display the input field into which the examinee ID can be input on the display 15 and prompt the processor to input the examinee ID when storing the second wear data in the memory 72.

As illustrated in Fig. 10, for example, the controller 70 displays the first and second wear data as the comparison information in parallel on the same screen to enable the comparison of the first wear data and the second wear data (S107; control step). Naturally, the area to display the second wear data is not limited to the second area 65. The second wear data may be displayed in, for example, a different area (for example, the first area 60).

In the embodiment, for example, the second captured images and second spectacle wearing parameters of the second wear data are displayed as the comparison information. As illustrated in Fig. 10, the second captured images (second images) of the second wear data are displayed in, for example, an image display field 95 on the fit check screen displayed on the display 15. For example, the captured images such as the second front image 620b, the second left side image 621b, and the second right side image 622b are displayed as the second captured images. Moreover, the second spectacle wearing parameters of the second wear data are displayed in, for example, a measurement value display field 80b on the fit check screen. The display layout of the second wear data is not limited to this. The second wear data may be displayed in any layout.

For example, the processor checks the first wear data and the second wear data on the fit check screen displayed on the display 15, and determines whether or not the fit is appropriate (S108).

The controller 70 may acquire difference data between the first wear data and the second wear data and display the difference data as the comparison information to further facilitate the processor's determination of the fit. For example, the controller 70 may display the difference data in various forms such as a numerical value, color, and graphics. When, for example, displaying a numerical value as the difference data, the controller 70 may calculate and display a difference (displacement) of the spectacle wearing parameter, or calculate and display a displacement between images. Moreover, when, for example, displaying a color as the difference data, the controller 70 may change the color according to the displacement and display the changed color. For example, the controller 70 may display the color as the difference data in an area different from the display area of a captured image, and the display area of a spectacle wearing parameter, or superimpose and display the color as the difference data on the captured image or the spectacle wearing parameter. Moreover, when, for example, displaying graphics as the difference data, the controller 70 may calculate a displacement between images, and superimpose and display the graphics at a position where the displacement between the captured images is occurring. In this manner, for example, the controller 70 acquires and outputs (displays) the difference data between the first wear data and the second wear data to enable the processor to easily check a change in fit.

The embodiment illustrates, as an example, the case where captured images and spectacle wearing parameters of wear data are displayed as the comparison information. However, the embodiment is not limited to this. The comparison information to be output (displayed) may be a combination of various pieces of wear data. For example, the first and second images and the difference data may be displayed as the comparison information. Alternatively, the first and second images may be displayed as the comparison information.

The embodiment illustrates, as an example, the case where the processor checks the first wear data and the second wear data, and determines whether or not the fit is appropriate. However, the embodiment is not limited to this. For example, the controller 70 may acquire the difference data between the first wear data and the second wear data, and display the difference data as the comparison information. In this case, the processor or the controller 70 may determine whether or not the fit is appropriate on the basis of the difference data. In this case, for example, the controller 70 calculates a displacement between the images (a displacement between the first and second images) of the first wear data and the second wear data. The processor or the controller 70 may determine whether or not the fit is appropriate on the basis of whether or not the displacement is equal to or greater than a predetermined threshold. Moreover, in this case, the controller 70 may calculate and display, as the comparison information, the difference between spectacle wearing parameters (the difference value; the difference between the first spectacle wearing parameter and the second spectacle wearing parameter) of the first wear data and the second wear data. The processor or the controller 70 may determine whether or not the fit is appropriate on the basis of whether or not the difference is equal to or greater than a predetermined threshold.

If, for example, having determined that the fit is not appropriate, the processor adjusts the fit (S102) again. For example, the processor repeatedly performs the steps from the adjustment of the fit (S102) to the comparative display (S107) until the fit becomes appropriate. For example, the processor finishes the adjustment of the fit if having determined that the fit is appropriate. When the adjustment of the fit (S10) is complete as described above, the production of the spectacles is complete.

For example, the first wear data obtained by photographing the examinee wearing the spectacle frame at the first timing (for example, before the completion of the spectacles (before lenses are put in the frame)), and the second wear data obtained by photographing the examinee wearing the spectacle frame at the second timing (for example, after the completion of the spectacles (after the lenses are put in the frame)) different from the first timing are acquired in this manner. Furthermore, the comparison information for comparing the first wear data and the second wear data is output. Consequently, a processor can check the fit for the examinee on the basis of the comparison information. Furthermore, the processor can easily and suitably adjust the fit.

Moreover, for example, the above configuration allows the processor to compare the first wear data photographed before the completion of the spectacles and the second wear data after the completion of the spectacles. In other words, the processor can easily reproduce the fit before the completion of the spectacles (at the time when first spectacle wearing parameters are calculated), even after the completion of the spectacles.

Moreover, there is also a case where, for example, the fit changes from the one at the completion of the spectacles while the examinee uses the produced spectacles for a fixed period of time, which makes the examinee uncomfortable with the spectacles on. Even in this case, the processor can easily check the difference between the current fit and the fit at the completion of the spectacles. Hence, the processor can easily reproduce the fit at the completion of the spectacles.

Moreover, for example, the above configuration allows the processor to compare the wearing parameters after the adjustment of the fit, which were acquired at the timings different from each other. Hence, the above configuration can be used to improve the processor's fitting skill. In other words, the processor himself/herself or another processor (for example, a skilled processor) can compare the wearing parameters acquired when the fit was adjusted in the past and the wearing parameters acquired when the processor adjusts the fit at present. Hence, the processor can check whether or not there is a large difference in the adjustment of the fit on the basis of a result of comparing the wearing parameters. Hence, the processor can go through fit adjustment training for processors to cause the processor to reproduce a certain fit.

Moreover, in the embodiment, for example, the first wear data and the second wear data as the comparison information are displayed on the monitor to enable the processor to quickly check the fit while viewing the display screen. Moreover, the processor can quickly check the fit while viewing the display screen, for example, after making readjustments after checking the fit.

Additionally, in the embodiment, for example, if the comparison information to be output includes the first image and first spectacle wearing parameter of the first wear data, and the second image and the second spectacle wearing parameter of the second wear data, the processor can check the fit by comparing the first image and first spectacle wearing parameter and the second image and second spectacle wearing parameter. The processor can check the fit while checking both of the image and the spectacle wearing parameter. Hence, the processor can check the fit more easily with higher accuracy.

### <Modifications>

In the embodiment, the case where the second wear data is acquired after the first wear data is called on the fit check screen is described as an example. However, the embodiment is not limited to this. For example, the second wear data may be acquired before the first wear data is called. In this case, the first wear data may be called after the examinee is photographed and the second wear data is acquired.

In the embodiment, the case where the comparison information for comparing the first wear data and the second wear data is output to allow the processor to easily check the fit is described as an example. However, the embodiment is not limited to this. The processor may compare the first wear data and the fit of the spectacle frame with the spectacle lenses therein worn by the examinee to adjust the fit. In this case, for example, the processor may prompt the examinee to put on the spectacle frame with the spectacle lenses therein to adjust the fit while checking the output first wear data.

In the embodiment, the case where the comparison information for comparing the first wear data and the second wear data is output is described as an example. However, the embodiment is not limited to this. The controller 70 may be configured in such a manner as to be capable of storing a plurality of pieces of wear data related to the same examinee, in the memory 72. In this case, for example, the processor may select wear data (to be output in a comparable manner) used when the fit is checked, from the plurality of pieces of wear data stored in the memory 72.

In the embodiment, the case is described, as an example, in which when outputting the first images of the first wear data and the second images of the second wear data as the comparison information, the controller 70 outputs the first and second images being still images. However, the embodiment is not limited to this. At least the first image or the second image may be a moving image. For example, the controller 70 may display the first image being a still image, and the second image being a moving image, as an example. In this case, for example, the controller 70 displays the second image that is being captured while updating it in real time. Furthermore, the controller 70 may analyze the second image in real time and update and display the calculated second wearing parameters as the need arises.

The number of front and side images used to acquire the spectacle wearing parameters that are used when the spectacle frame and the eyes of the examinee are detected is not limited to one. The controller 70 may detect the spectacle frame and the eyes of the examinee on the basis of a plurality of captured images, and acquire spectacle wearing parameters. In this case, for example, the controller 70 may capture a plurality of front images (a left-eye front image, a right-eye front image, and the like) and acquire the spectacle wearing parameters of the right and left eyes, respectively. Moreover, for example, the controller 70 may acquire the plurality of captured images including a captured image that has captured the spectacle frame and a captured image that has captured the eye of the examinee, acquire the spectacle frame information and the pupil information of the examinee separately, and acquire the spectacle wearing parameters.

In the embodiment, the example where spectacle wearing parameters are automatically detected by image analysis is described. However, the embodiment is not limited to this. For example, spectacle wearing parameters may be manually or automatically detected. If spectacle wearing parameters are manually or automatically detected, a captured image is automatically analyzed to display a target based on the detection result on the captured image as illustrated in Fig. 7. The processor moves the target on the captured image by operating the operating unit 10. The processor acquires a value corresponding to the moved position of the target as the spectacle wearing parameter. In other words, the measurement value in the measurement value display field 80 is also changed in conjunction with the movement of the target.

In the embodiment, the case is described, as an example, in which each target indicating a spectacle wearing parameter is superimposed and displayed on a captured image. However, the embodiment is not limited to this. The controller 70 is simply required to display each target indicating a spectacle wearing parameter on the display screen of the display 15. In the embodiment, the case where a captured image and a spectacle wearing parameter are displayed in different areas, respectively, is described as an example. However, the embodiment is not limited to this. The controller 70 may superimpose and display a numerical value of a spectacle wearing parameter on a captured image.

In the embodiment, the case where the image analysis process is performed on an image captured using an optical system that changes a presentation position of a fixation target by changing the angle of the reflective mirror 410 is described as an example. However, the embodiment is not limited to this. The image analysis process of the embodiment can be applied to an image that has captured an examinee wearing spectacles. In other words, the optical system for capturing an image is not limited to those of the embodiment, and may be other various optical systems.

In the embodiment, the spectacle wearing image analysis apparatus 1 includes the left photographing optical system 500L placed to the left of the examinee, and the right photographing optical system 500R placed to the right of the examinee, as the side photographing optical system 500 for acquiring left and right side images. However, the embodiment is not limited to this. One photographing optical system may be used to capture both of left and right side images. For example, one side photographing optical system may be used to acquire both of left and right side images. The side photographing optical system in this case may be, for example, an optical system that photographs left and right sides by the drive of a reflective mirror, or the like, or an optical system that photographs left and right sides by being moved. Moreover, for example, the measuring optical system for capturing a front image may be configured in such a manner as to acquire left and right side images. In this case, for example, the measuring optical system for capturing a front image may be configured in such a manner as to acquire left and right side images by being moved.

In the embodiment, the distance measuring optical system 200 and the near measuring optical system 300 are provided separately. However, the embodiment is not limited to this. It is simply required to use at least one of the optical systems and capture an image in the distance viewing state or the near viewing state. In this case, for example, the controller 70 may acquire spectacle wearing parameters acquired from one of the images in the distance viewing state and the near viewing state on the basis of spectacle wearing parameters of the other.

The technology disclosed in the embodiment can also be applied to an apparatus that mounts an attachment, seal, or the like as a mark on a spectacle frame and acquire a spectacle wearing parameter. The technology disclosed in the embodiment is used when, for example, detecting a mark of an attachment, seal, or the like in a captured image of a spectacle frame on which the mark is attached.

The spectacle wearing image analysis apparatus 1 of the embodiment includes a plurality of imaging optical systems and captures an image of an examinee. However, the configuration of the spectacle wearing image analysis apparatus 1 is not limited to this. For example, the spectacle wearing image analysis apparatus 1 does not need to include the imaging optical system. In this case, the spectacle wearing image analysis apparatus 1 receives an image obtained by photographing the examinee with an imaging optical system outside the apparatus, with various data communication means. The spectacle wearing image analysis apparatus 1 then measures spectacle wearing parameters of the examinee on the basis of the received image, and acquires wear data.

The technology of the present disclosure is not limited to the apparatus described in the embodiment. For example, spectacle wearing image analysis software (program) that implements the functions of the above embodiment can be supplied to a system or apparatus via a network or various storage media. It is also possible to allow a computer (for example, a CPU) of the system or apparatus to read and execute the program. Consequently, for example, the computer can execute the functions (for example, the acquisition step of S4 to S6, and S104 to S106 and the control step of S107) of the above controller 70 illustrated in Figs. 5 and 8.

In other words, the spectacle wearing image analysis program according to the embodiment of the present disclosure may cause the computer to execute an acquisition step of acquiring first wear data obtained by photographing an examinee wearing a spectacle frame at a first timing, and second wear data obtained by photographing the examinee wearing the spectacle frame at a timing different from the first timing, and a control step of outputting comparison information for comparing the first wear data and the second wear data.

Moreover, the spectacle wearing image analysis apparatus according to the embodiment of the present disclosure may include acquisition means for acquiring first wear data corresponding to a first image obtained by photographing an examinee wearing a spectacle frame at a first date and time, and second wear data corresponding to a second image obtained by photographing the examinee wearing the spectacle frame at a second date and time different from the first date and time, and control means for outputting comparison information for comparing the first wear data and the second wear data.

Moreover, the embodiment of the present disclosure may be the following first to sixth spectacle wearing image analysis apparatuses, first spectacle wearing image analysis method, and first spectacle wearing image analysis program.

The first spectacle wearing image analysis apparatus is a spectacle wearing image analysis apparatus for analyzing an image of an examinee wearing spectacles, and measuring a spectacle wearing parameter of the examinee, and includes acquisition means (70) for acquiring first wear data of an examinee wearing a spectacle frame, the first wear data having been captured by a photographing apparatus (1), and second wear data of the examinee wearing the spectacle frame, the second wear data having been captured by the photographing apparatus at a date and time different from that of the first wear data, and control means (70) for comparably outputting the first wear data and the second wear data.

The second spectacle wearing image analysis apparatus is the first spectacle wearing image analysis apparatus, and the control means comparably displays the first wear data and the second wear data on a monitor.

The third spectacle wearing image analysis apparatus is the first or second spectacle wearing image analysis apparatus, and the control means includes at least a first image as the first wear data, and includes at least a second image as the second wear data.

The fourth spectacle wearing image analysis apparatus is the first or second spectacle wearing image analysis apparatus, and the control means includes at least a first spectacle wearing parameter acquired by analyzing a first image, as the first wear data, and includes at least a second spectacle wearing parameter acquired by analyzing a second image, as the second wear data.

The fifth spectacle wearing image analysis apparatus is the first or second spectacle wearing image analysis apparatus, and the control means includes a first image and a first spectacle wearing parameter acquired by analyzing the first image, as the first wear data, and includes at least a second image and a second spectacle wearing parameter acquired by analyzing the second image, as the second wear data.

The sixth spectacle wearing image analysis apparatus is any of the first to fifth spectacle wearing image analysis apparatus, and the control means makes the first wear data and the second wear data comparable by performing subtraction processing on the first wear data and the second wear data, acquiring difference data, and outputting the difference data.

The first spectacle wearing image analysis method is a spectacle wearing image analysis method for analyzing an image of an examinee wearing spectacles and measuring a spectacle wearing parameter of the examinee, and includes an acquisition step of acquiring first wear data of an examinee wearing a spectacle frame, the first wear data having been captured by a photographing apparatus, and second wear data of the examinee wearing the spectacle frame, the second wear data having been captured by the photographing apparatus at a date and time different from that of the first wear data, and a control step of comparably outputting the first wear data and the second wear data.

The first spectacle wearing image analysis program is a spectacle wearing image analysis program to be executed in a spectacle wearing image analysis apparatus for analyzing an image of an examinee wearing spectacles and measuring a spectacle wearing parameter of the examinee, and causes the spectacle wearing image analysis apparatus to execute the first spectacle wearing image analysis method.

The foregoing detailed description has been presented for the purposes of illustration and description. Many modifications and variations are possible in light of the above teaching. It is not intended to be exhaustive or to limit the subject matter described herein to the precise form disclosed. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims appended hereto.

## Claims

1. A spectacle wearing image analysis apparatus (1) comprising:
acquisition means (70) for acquiring first wear data obtained by photographing an examinee wearing a spectacle frame at a first timing, and second wear data obtained by photographing the examinee wearing the spectacle frame at a second timing different from the first timing; and
control means (70) for outputting comparison information for comparing the first wear data and the second wear data.

2. The spectacle wearing image analysis apparatus according to claim 1, wherein
the control means displays, on a monitor, the first wear data and the second wear data as the comparison information.

3. The spectacle wearing image analysis apparatus according to claim 1 or 2, wherein
the acquisition means includes at least a first image obtained by photographing at the first timing, in the first wear data, and includes at least a second image obtained by photographing at the second timing, in the second wear data, and
the control means outputs the first and second images as the comparison information.

4. The spectacle wearing image analysis apparatus according to claim 1 or 2, wherein
the acquisition means includes at least a first spectacle wearing parameter acquired by analyzing a first image obtained by photographing at the first timing, in the first wear data, and includes at least a second spectacle wearing parameter acquired by analyzing a second image obtained by photographing at the second timing, in the second wear data, and
the control means outputs the first and second spectacle wearing parameters as the comparison information.

5. The spectacle wearing image analysis apparatus according to claim 1 or 2, wherein
the acquisition means includes at least a first image obtained by photographing at the first timing, and a first spectacle wearing parameter acquired by analyzing the first image, in the first wear data, and includes at least a second image obtained by photographing at the second timing, and a second spectacle wearing parameter acquired by analyzing the second image, in the second wear data, and
the control means outputs, as the comparison information, the first image, the first spectacle wearing parameter, the second image, and the second spectacle wearing parameter.

6. The spectacle wearing image analysis apparatus according to any one of claims 1 to 5, wherein
the control means acquires difference data by performing subtraction processing on the first wear data and the second wear data, and outputs the difference data as the comparison information.

7. The spectacle wearing image analysis apparatus according to any one of claims 1 to 6, further comprising
a photographing apparatus (1) for photographing the examinee wearing the spectacle frame.

8. A spectacle wearing image analysis method comprising:
an acquisition step of acquiring first wear data obtained by photographing an examinee wearing a spectacle frame at a first timing, and second wear data obtained by photographing the examinee wearing the spectacle frame at a timing different from the first timing; and
a control step of outputting comparison information for comparing the first wear data and the second wear data.

9. A spectacle wearing image analysis program causing a spectacle wearing image analysis apparatus to execute the spectacle wearing image analysis method according to claim 8.
